# EUROPEAN PATENT SPECIFICATION

(11) **EP 1 549 157 B1**
(45) Date of publication and mention of the grant of the patent: **03.01.2018**
(21) Application number: 03766400.0
(22) Date of filing: 30.07.2003
(51) Int. Cl.: A23G 1/00, A23G 3/34, A23G 3/36, A23G 3/48, A23G 3/50, A23G 3/54, A23L 5/43

(54) **CONFECTIONERY COMPOSITION COMPRISING BLUE ANTHOCYANIN**
SÜSSWARENZUSAMMENSETZUNG DIE BLAUANTHOCYANE ENTHÄLT
COMPOSITION DE CONFISERIE COMPRENANT DES ANTHOCYANINES BLEUES

(30) Priority: 31.07.2002 FR 0209773
(43) Date of publication of application: 06.07.2005
(73) Proprietor: MARS, INCORPORATED, McLean, Virginia 22101-3883 (US)
(72) Inventor: NGUYEN, Isabelle, F-67500 Haguenau (FR)
(74) Representative: Hirsch & Associés
(86) International application number: PCT/EP2003/009313
(87) International publication number: WO 2004/012526

(56) References cited:
- EP-A- 0 387 739
- EP-A- 1 279 703
- WO-A-90/01270
- DE-A- 2 820 981
- US-A- 3 963 700
- US-A- 4 172 902
- US-A- 4 307 117
- US-A- 4 452 822
- US-A- 4 713 252
- US-A1- 2002 152 927
- US-B1- 6 190 686
- PATENT ABSTRACTS OF JAPAN vol. 2000, no. 05, 14 September 2000 (2000-09-14) & JP 2000 032954 A (GOSHO:KK;OKUMURA SHOZO), 2 February 2000 (2000-02-02)
- PATENT ABSTRACTS OF JAPAN vol. 013, no. 049 (C-565), 3 February 1989 (1989-02-03) & JP 63 243167 A (HIDEKAZU IDAKA), 11 October 1988 (1988-10-11)

## Description

The invention relates to a novel confectionery composition having a blue colour, obtained with a natural colouring and its method of preparation and a product useful for this purpose.

Colourings are being increasingly used. In parallel, food additives which are of a natural origin are being sought. Natural colourings are therefore being sought. Up until now, no natural colouring exists which is blue in colour, except spirulina blue or linablue A, which is not authorized in Europe.

Anthocyanins and their derivatives are moreover known, whose colour varies according to the pH. It is known that at a pH greater than or equal to 7, the anthocyanins are blue in colour. However, these compounds pose problems of stability. US-P-4172902 discloses gels of a particular source of anthocyanins, namely "Morning blue". At basic pH values (7 and 8), the colour is not stable for more than two days for buffered solutions. For gels, the stability is stated as being 320 hours, that is about two weeks. This duration is not satisfactory for products having optimum use-by dates of several weeks or several months. In addition, the gel form limits application to the fields cited in US-P-4172902, namely icing, coulis, gelatin composition, ice products.

The company Fazer has been marketing a biscuit with icing based on (amorphous) icing sugar comprising, according to the information provided on the box, grape juice, in Finland since the end of 2000, under the name "CARNEVAL". This biscuit appears to apply the principles of icing developed in the US patent cited above.

The document EP-A-0007095 discloses the stabilization of anthocyanins with an ascorbic acid derivative. By virtue of the nature of the stabilizing agent, the pH is strongly acidic, which prevents obtaining the blue colour.

US 4713252 discloses a process for producing a sweetened, semi-moist fruit product having a moisture content in the range of 10% to 40% comprising:
(a) coating fresh or frozen fruit with an effective amount of sugar to initiate nondestructive osmotic fluid-sugar exchange;
(b) continuing the nondestructive osmotic fluid-sugar exchange within the fruit in which fruit juices migrate outward from the fruit and sugar migrates into the fruit by the osmotic exchange until the sugar concentration reaches an equilibrium across the fruit, without disturbing the natural skin of the fruit to produce a mixture of sugared fruit and sugared fruit syrup,
(e) separating the syrup from the fruit;
(d) rinsing the fruit to remove surface sugar and syrup from outside the fruit: and
(e) drying the sweetened fruit in a vacuum atmosphere of up to 400 microns Hg and suddenly releasing the vacuum atmosphere within 1 to 2 minutes to collapse the fruit to a relatively wrinkled solid, chewy and palatable condition.

EP 1279703 discloses a process for modifying the taste and/or odour properties of a food colouring substance having unpleasant taste and/or odour properties, which process comprises treating the substance with an aluminium compound, and adjusting the pH to a value of from 5 to 9, to produce an aluminium lake comprising said substance, wherein the taste and/or odour properties of the lake are organoleptically masked in comparison with those of said substance.

US 2002/0006458 discloses a process for producing a batch of sugar crystals having a color added thereto causing the crystal to have a gem-like appearance comprising the steps of (a) randomly tumbling sugar crystals of a predetermined size; (b) applying a coating of a liquefied extract having color attributes to said randomly tumbling sugar crystals so as to coat substantially the entire surface of each of said crystals; (c) and drying said coated crystals for a predetermined time period at a temperature above room temperature. The object of the invention is therefore to provide a composition containing a natural blue colour, which is stable and appropriate for the preparation of confectionery products. The invention therefore provides a dragée or a hard coated confectionery product comprising a center core and at least one layer of a composition comprising blue anthocyanin and crystallised sugar.

According to one embodiment, the anthocyanin represents 0.5 to 10%, preferably 1 to 5% by weight of the composition.

According to one embodiment, the granulated sugar represents from 85 to 99.5%, preferably 95 to 99% by weight of the composition.

According to one embodiment, the composition comprises additives in a quantity of from 1 to 5% by weight, preferably less than 2%.

According to one embodiment, the composition consists of granulated sugar, anthocyanin in a quantity of from 1 to 5%, and additives in a quantity of up to 1%.

According to one embodiment, the composition comprises, in addition, a natural yellow colouring.

The subject of the invention is also a process for manufacturing the dragée or hard coated confectionery item according to the invention, comprising the step of coating the core with a syrup containing blue anthocyanin.

The subject of the invention is also a syrup containing blue anthocyanin, characterized in that the syrup has a total solids content (TS) of 60 to 85.

According to one embodiment, the syrup has a pH ranging from 7 to 9.

According to one embodiment, the syrup has a TS (Total Solids content) of 70-75.

The subject of the invention is finally a process for stabilizing blue anthocyanin, by incorporation with granulated sugar.

The invention is now described in greater detail in the description which follows.

The term "blue colour" has the meaning normally attributed. Preferably, this term is defined in the L, a, b colorimetric system by the following values: L any value, a between -20 and +20, b between -60 and -30.

The term "sugar" has the common meaning in the confectionery art, namely in particular sucrose, glucose or dextrose syrups or mixtures thereof.

The invention provides a stabilized anthocyanin composition. This anthocyanin is any anthocyanin or its derivatives. In particular, it may be extracted from the elder, from the purple carrot, from the red cabbage, or from other sources such as grape or blackcurrant.

It has been found that this composition is particularly stable even after 6 months, whereas anthocyanin solutions are known to be particularly unstable in particular to high pH values.

Without wishing to be linked to any theory, the applicant thinks that the crystalline form of the sugar stabilizes the anthocyanin.

The applicant has found that an anthocyanin incorporated in granulated sugar retains its colour. An anthocyanin which is violet in colour remains of this colour once in sugar. Likewise, the blue colour persists once the anthocyanin is combined with granulated sugar.

The compositions comprise variable quantities of anthocyanins, for example of between 0.5 and 10%, preferably 1 and 5% by weight relative to the weight of the composition. The remainder of the composition is sugars with optionally other additives conventionally used, normally in quantities of less than 5%, preferably less than 2%.

The granulated sugar represents in general from 85 to 99.5%, preferably 95 to 99%. Preferably, the outer layer consists of granulated sugar and anthocyanin, conventional additives being optionally added in small quantities, typically less than 1%.

The invention applies to confectionery products of the dragée type, namely a core and a layer of granulated sugar.

The cores of the compositions of the dragée type are many. They may be a natural centre (almond, hazelnut, groundnut and the like) or a "confectionery" centre (boiled sweet, caramel, fondant, chocolate and the like). The cores may then be coated with chocolate, with successive layers of sugars or other substances such as polyols, gums and natural polymers.

The process for manufacturing compositions of the dragée type is the conventional coating process comprising the deposition of a plurality of sublayers, for example between 5 and 30, by a succession of phases of application and drying carried out, for example, in a pan.

Other conventional processes allowing the production of granulated sugar are also possible. There may be mentioned the technologies using coating films, which were first applied in the pharmaceutical industry and which are increasingly encountered in confectionery for dragées or hard coated confectionery products.

The aqueous solution used in this coating process comprises a syrup supplemented with an anthocyanin, at an appropriate pH which is typically between 7 and 9. The total solids content (TS) of the syrup is typically between 60 and 85, for example about 70-75. The pH is adjusted to the required value (according to the type of anthocyanin selected) by adding an appropriate buffer, for example based on sodium hydroxide.

The invention therefore allows a stable natural blue colour to be obtained. As a mixture with a colouring of the natural yellow type (for example curcumin or lutein), a stable natural green colouring is thus obtained, which was not possible up until now.

The invention is illustrated by the nonlimiting examples below.

### EXAMPLES:

A solution of red cabbage anthocyanin is prepared from powdered colouring (anthocyanin supported on maltodextrin) in water. The colouring water weight ratio is 30:70.

The pH of the solution is 3.5. The colour is violet.

This same solution is supplemented with 1 M sodium hydroxide until the colour is established at blue (at pH 6.06, the colour is appreciably violet). The pH of the final solution retained is 7.9.

A sugar syrup having a TS of 73 is prepared in parallel. The pH of this syrup is about 8.4.

Three parts by weight of each solution of colouring are mixed with 97 parts by weight of syrup. The final coloured syrup has, in each case, the same colour as the starting solution. The pH of the violet syrup is about 4 while the pH of the blue syrup is about 7.9.

With these coloured syrups, a core comprising a groundnut and a chocolate layer is coated under conventional conditions. Dragées having the colour of the starting coloured syrup are obtained after about 20 passes. The layer contains about 98.5% of granulated sugar and about 1.5% of blue anthocyanin.

These dragees are placed in packets in which they are usually sold. The packets are stored at ambient temperature, with no special precautions.

After more than 12 months, the colour of the dragees remains unchanged.

Two stability tests were also carried out in a saturated atmosphere in a closed chamber, for 7 days. In the first chamber is placed a container of HCl in sufficient quantity to saturate the atmosphere up to a pH of about 3.5 (pH paper). In the second chamber is placed a container of aqueous ammonia in a sufficient quantity to saturate the atmosphere up to a pH of 10-10.5 (pH paper). After having been kept in the oven in an acidic atmosphere, the dragees have a violet colour while the dragees which were kept in the basic atmosphere have a bronze green colour.

## Claims

1. A hard coated confectionery product comprising a center core and at least one
layer of a composition comprising blue anthocyanin and crystallised sugar.

2. The hard coated confectionery product according to claim 1, in which the anthocyanin makes up 0.5 to 10%, of the composition.

3. The hard coated confectionery product according to claim 1, in which the anthocyanin makes up from 1 to 5% by weight, of the composition.

4. The hard coated confectionery product according to any one of claims 1 to 2, in which the crystallised sugar makes up from 85-99.5%, of the composition.

5. The hard coated confectionery product according to claim 3, in which the crystallised sugar makes up from 95-99% by weight, of the composition.

6. The hard coated confectionery product according to any one of claims 1 to 4, comprising additives in an amount of from 1 to 5% by weight.

7. The hard coated confectionery product according to claim 6, comprising additives in an amount of less than 2% by weight.

8. The hard coated confectionery product of claim 1, wherein the at least one layer is constituted by crystallised sugar, anthocyanin in an amount of from 1 to 5%, and additives in an amount of up to 1%.

9. The hard coated confectionery product according to claim 1 or 8, wherein the composition further comprises a natural yellow colouring agent.

10. A method for producing the hard coated confectionery product of claim 1, comprising the step of hard coating the center core with a syrup containing blue anthocyanin.

11. The method for producing a hard coated confectionery product according to claim 10, in which the pH of the syrup ranges from 7-9. R:\19300\19328\19328EP\2-Examination\19328EP161202-amended claims no marks.doc

12. The method for producing a hard coated confectionery product according to claim 10 or 11, in which the syrup has a total solids content of 60 to 85.

13. The method for producing a hard coated confectionery product according to claim 12, in which the syrup has a total solids content of 70 to 75.

14. A syrup containing blue anthocyanin, **characterized in that** the syrup has a total solids content (TS) of 60 to 85.

15. The syrup according to claim 14, having a pH ranging from 7-9.

16. The syrup according to claim 14, having a total solids content from 70 to 75.

17. A method for stabilising blue anthocyanin, by incorporation with a crystallised sugar.

## Patentansprüche

1. Ein Süßwarenprodukt mit hartem Überzug umfassend einen mittleren Kern und mindestens eine Schicht aus einer Zusammensetzung die Blauanthocyan und Kristallzucker umfasst.

2. Das Süßwarenprodukt mit hartem Überzug nach Anspruch 1, wobei das Anthocyan von 0,5 bis 10% der Zusammensetzung ausmacht.

3. Das Süßwarenprodukt mit hartem Überzug nach Anspruch 1, wobei das Anthocyan von 1 bis 5 Gewichts-% der Zusammensetzung ausmacht.

4. Das Süßwarenprodukt mit hartem Überzug nach einem der Ansprüche 1 bis 2, wobei der Kristallzucker von 85 bis 99,5% der Zusammensetzung ausmacht.

5. Das Süßwarenprodukt mit hartem Überzug nach Anspruch 3, wobei der Kristallzucker von 95 bis 99 Gewichts-% der Zusammensetzung ausmacht.

6. Das Süßwarenprodukt mit hartem Überzug nach einem der Ansprüche 1 bis 4, welches Additive in einer Menge von 1 bis 5 Gewichts-% umfasst.

7. Das Süßwarenprodukt mit hartem Überzug nach Anspruch 6, welches Additive in einer Menge von weniger als 2 Gewichts-% umfasst.

8. Das Süßwarenprodukt mit hartem Überzug nach Anspruch 1, wobei die mindestens eine Schicht aus Kristallzucker, Anthocyan in einer Menge von 1 bis 5% und Zusatzstoffen in einer Menge von bis zu 1% besteht.

9. Das Süßwarenprodukt mit hartem Überzug nach Anspruch 1 oder 8, wobei die Zusammensetzung ferner einen natürlichen gelben Farbstoff umfasst.

10. Ein Verfahren zur Herstellung eines Süßwarenprodukts mit hartem Überzug nach Anspruch 1, welches den Schritt zur Hartbeschichtung des mittleren Kerns mit einem Sirup umfasst der Blauanthocyan enthält.

11. Das Verfahren zur Herstellung eines Süßwarenprodukts mit hartem Überzug nach Anspruch 10, wobei der pH-Wert des Sirups im Bereich von 7 bis 9 liegt.

12. Das Verfahren zur Herstellung eines Süßwarenprodukts mit hartem Überzug nach Anspruch 10 oder 11, wobei der Sirup einen Gesamtfeststoffgehalt von 60 bis 85 aufweist.

13. Das Verfahren zur Herstellung eines Süßwarenprodukts mit hartem Überzug nach Anspruch 12, wobei der Sirup einen Gesamtfeststoffgehalt von 70 bis 75 aufweist.

14. Ein Sirup, der Blauanthocyan enthält, **dadurch gekennzeichnet dass** der Sirup einen Gesamtfeststoffgehalt (TS) von 60 bis 85 aufweist.

15. Der Sirup nach Anspruch 14, welcher einen, im Bereich von 7 bis 9 liegenden pH-Wert aufweist.

16. Der Sirup nach Anspruch 14, welcher einen Gesamtfeststoffgehalt von 70 bis 75 aufweist.

17. Ein Verfahren zum Stabilisieren von Blauanthocyan wenn es in einem Kristallzucker inkorporiert ist.

## Revendications

1. Un produit de confiserie de type dragée comprenant un coeur central et au moins une couche d'une composition comprenant de l'anthocyane bleue et du sucre cristallisé.

2. Le produit de confiserie de type dragée selon la revendication 1, dans lequel l'anthocyane représente 0,5 à 10% en poids de la composition.

3. Le produit de confiserie de type dragée selon la revendication 1, dans lequel l'anthocyane représente 1 à 5% en poids de la composition.

4. Le produit de confiserie de type dragée selon la revendication 1 ou la revendication 2, dans lequel le sucre cristallisé représente de 85 à 99,5% de la composition.

5. Le produit de confiserie de type dragée selon la revendication 3, dans lequel le sucre cristallisé représente 95 à 99% en poids de la composition.

6. Le produit de confiserie de type dragée selon l'une des revendications 1 à 4, comprenant des additifs en une quantité de 1 à 5% en poids.

7. Le produit de confiserie de type dragée selon la revendication 6, comprenant des additifs en une quantité inférieure à 2% en poids.

8. Le produit de confiserie de type dragée selon la revendication 1, dans lequel la au moins une couche est constituée de sucre cristallisé, d'anthocyane en une quantité de 1 à 5%, et d'additifs en une quantité jusque 1%.

9. Le produit de confiserie de type dragée selon l'une des revendications 1 ou 8, dans lequel la composition comprend en outre un colorant jaune naturel.

10. Un procédé de fabrication d'un produit de confiserie de type dragée selon la revendication 1, comprenant l'étape de dragéification du coeur avec un sirop contenant l'anthocyane bleue.

11. Le procédé de fabrication d'un produit de confiserie de type dragée selon la revendication 10, dans lequel le sirop a un pH allant de 7 à 9.

12. Le procédé de fabrication d'un produit de confiserie de type dragée selon la revendication 10 ou 11, dans lequel le sirop a un contenu total en solides de 60 à 85.

13. Le procédé de fabrication d'un produit de confiserie de type dragée selon la revendication 12, dans lequel le sirop a un contenu total en solides de 70-75.

14. Un sirop contenant de l'anthocyane bleue, **caractérisé en ce que** le sirop a un contenu total en solides (TS) de 60 à 85.

15. Le sirop selon la revendication 14 ayant un pH allant de 7 à 9.

16. Le sirop selon la revendication 14, ayant un contenu total en solides de 70-75.

17. Un procédé de stabilisation d'anthocyane bleue, par incorporation avec du sucre cristallisé.
